# EUROPÄISCHE PATENTSCHRIFT

(11) **EP 3 596 174 B1**
(45) Veröffentlichungstag und Bekanntmachung des Hinweises auf die Patenterteilung: **30.09.2020**
(21) Anmeldenummer: 18710064.9
(22) Anmeldetag: 16.03.2018
(51) Int. Cl.: C09D 11/00, C09D 1/00, C09D 1/10, C09D 11/10, C09D 11/101, C09D 11/104, C09D 11/38

(54) **LAMINAT-TINTE**
LAMINATABLE INK
ENCRE POUR STRATIFIER

(30) Priorität: 17.03.2017 EP 17161572
(43) Veröffentlichungstag der Anmeldung: 22.01.2020
(73) Patentinhaber: TIGER Coatings GmbH & Co. KG, 4600 Wels (AT)
(72) Erfinder: HOLZINGER, Dieter, 4600 Wels (AT); EDER, Peter, 4600 Wels (AT); CAJIDE-CAMINA, Erikarmen, 4600 Wels (AT)
(74) Vertreter: Sonn & Partner Patentanwälte
(86) Internationale Anmeldenummer: PCT/EP2018/056616
(87) Internationale Veröffentlichungsnummer: WO 2018/167250

(56) Entgegenhaltungen:
- WO-A2-03/077033
- US-A1- 2005 059 760
- US-A1- 2009 250 218
- US-B2- 8 642 673

## Beschreibung

Die Erfindung betrifft eine mehrstufig härtende Tinte für Tintenstrahldrucker zur Gestaltung von Vinylfolien, welche Tinte Verbindungen zur Bildung mindestens einer organischen Matrix, welche durch radikalische Polymerisation gehärtet wird und welche Härtung durch Strahlung initiiert werden kann, und Verbindungen zur Bildung mindestens einer anorganischen Matrix, welche durch nicht-radikalische Polymerisation gehärtet wird und welche Härtung thermisch initiiert werden kann, umfasst. Solche Tinten können zur Herstellung von Luxury-Vinyl-Tiles (LVTs) verwendet oder zur Bedruckung von Papier oder HDF-Platten und anschließender Verpressung mit Melamin-Overlay eingesetzt werden. Unter "Härtung durch Strahlung initiiert" wird im Sinne der vorliegenden Erfindung härtbar durch UV-, UV-LED oder Elektronenstrahlung verstanden.

LVTs bestehen aus zumindest zwei vinyl- oder polyesterbasierten Folien, die bei Temperaturen über 100 °C und Druck miteinander laminiert werden. Eine der Folien dient hierbei als Basisfolie zur Dekorierung während es sich bei der zweiten Folie um eine transparente, abriebsbeständige Schicht handelt. LVTs haben viele positive Eigenschaften: die Oberfläche ist dicht, schlag- und abriebresistent. Sie kann mit verschiedenen Strukturen versehen werden und hält auch hohen Temperaturen (zum Beispiel durch Zigarettenglut und heißen Topfböden) kurzzeitig stand, ohne Schaden zu nehmen. Die Oberfläche ist leicht zu pflegen und zu reinigen, hitze- und lichtbeständig sowie geruchsneutral und unempfindlich gegen Alkohol bzw. organische Lösungsmittel sowie die Einwirkung von Wasserdampf und Wasser. Die Hauptanwendung von LVTs besteht in der Fußbodenveredelung im Innenbereich. Durch naturnahe Designs wie zum Beispiel Holz-, Stein- und Metall- aber auch Fantasie-Layouts gewinnen LVTs zusätzlich an Attraktivität. Im Vergleich zu klassischen Laminatfußböden bilden LVTs verschiedene Vorteile: während Laminatfußböden auf Grund der vorhandenen Melaminoberfläche ein sehr hartes Trittgefühl vermitteln, erzeugen LVTs durch die vorhandenen, einige Millimeter dicken Abriebsfolien ein deutlich weicheres und angenehmeres Empfinden beim Auftreten, was sich sowohl im privaten aber auch im öffentlichen Bereich vermehrter Beliebtheit erfreut.

Die Herstellung gestalteter LVTs erfolgt durch Dekoration der Basisfolie, meist mit analogen Druckverfahren. Hierzu werden nach dem Stand der Technik entsprechende Folien i.a. mittels Rotationstiefdruck bzw. teilweise auch mittels Inkjet-Druck bedruckt, wobei primär Lösungsmittel-basierte oder wässrige Tinten zum Einsatz kommen. In einem nachfolgenden Arbeitsgang werden die dekorierten Folien mit einer transparenten Folie laminiert, wobei eine gute Zwischenschichthaftung zu erzielen ist. Bei nicht optimal geeigneten Tinten kommen häufig Klebesysteme zu Einsatz, um eine höhere Schälbeständigkeit zu erzielen.

Die Herstellung der entsprechenden Druckzylinder ist sehr aufwändig und daher nur bei hohen Stückzahlen der jeweiligen Dekore wirtschaftlich zu rechtfertigen.

Laminatfußböden bzw. Küchenarbeitsplatten bestehen meist aus einer MDF oder HDF Basisplatte, die in weiterer Folge mit einem bedruckten Papier, teilweise unter Verwendung zusätzlicher Papierlagen, unter Verwendung eines Melamin-basierten Overlays verpresst wird. Auch eine Flüssigimprägnierung mit Melamin- u/o Harnstoff-basierten Harzlösungen stellt einen möglichen Weg der Weiterverarbeitung dar. Die Verpressung findet entweder in sogenannten Kurztaktpressen, in Doppelbandpressen oder in Etagenpressen statt. Ein Großteil der heute hergestellten Laminate wird unter Verwendung analoger Druckverfahren produziert.

Zur Realisierung von Drucken mit kleiner Auflagezahl hat sich in jüngerer Zeit der digitale Tintenstrahldruck auf diversen Untergründen eine Marktposition schaffen können. Ein Druckkopf wird nach einer elektronischen Vorlage gesteuert und liefert das Bild nach ein- oder mehrmaligem Passieren (single pass oder multi pass) des zu bedruckenden Materials.

Strahlungshärtbare Tinten für den Tintenstrahldruck sind bekannt. Ihr Vorteil liegt im Umstand, dass der Druck unmittelbar nach seiner Aufbringung fixiert wird, was gerade auf nicht saugfähigen Untergründen wie zum Beispiel einer Vinylfolie den Vorteil hat, dass die aufgebrachten Farben nicht ineinander diffundieren können, womit Drucke mit größtmöglicher Farbbrillanz und Detailschärfe zugänglich werden.

Die US 8,642,673 B2 offenbart die Härtung einer Mischung aus Polyesteracrylat, dem strahlungshärtende Dynapol R110, einem Acrylatmonomer, einem Photoinitiator, einem Pigment und Dynasilan Glymo durch Bestrahlung, auch wird die thermische Behandlung der radikalisch polymerisierten Beschichtung zur Vervollständigung der Reaktion der Alkoxysilangruppen offenbart. Die genannte Zusammensetzung betrifft eine korrosionsschützende Beschichtung, auch ist es nicht möglich, die zahlenmittlere Molmasse (Mn) von Dynapol R110 zu eruieren. Gemäß der US 2010/0227942 ist davon auszugehen, dass die mittlere Molmasse von Dynapol R110 zwischen 5000 und 6000 g/mol liegt.

Zusammensetzungen für UV-härtbare Tinten offenbart beispielsweise die WO 02/061001 A1. Die Formulierungen enthalten zumindest ein multifunktionelles (Meth-)Acrylatmonomer, mindestens einen α,β-ungesättigten Ether, mindestens einen Photoinitiator und zumindest ein Pigment und weisen eine Viskosität kleiner 100 mPas bei 25°C auf.

Die EP 3 119 170 offenbart eine mehrstufig härtende wasserfreie Tinte, umfassend 2-(Vinylethoxy)ethylacrylat sowie weitere Acrylate, 10 - 25 Gew.% eines Epoxy-substituierten Trimethoxysilans, BYK-162 (ein Netz- und Dispergieradditiv für lösemittelhaltige Lacke und Pigmentkonzentrate), sowie Ebecryl 1360 (ein Silikon-Hexaacrylat, das zu Gleit-, Substratbenetzungs- und Fließeigenschaften beiträgt).

Die US 6,114,406 offenbart UV-härtbare Inkjet-Tinten auf der Basis von polyfunktionellen alkoxylierten und/oder polyfunktionellen polyalkoxylierten Acrylatmonomeren, einem Photoinitiator und einem farbgebenden Stoff, vorzugsweise Pigment. Optional können die Formulierungen auch geringere Mengen nicht-alkoxylierter Monomerer, welche gegebenenfalls auch monofunktionell sein können, umfassen. Darüber hinaus können optional Tenside, Benetzungshilfsmittel und Pigmentstabilisatoren zum Einsatz kommen. Die geoffenbarten Zusammensetzungen sind im Wesentlichen oder zur Gänze frei von Lösungsmitteln und weisen ein niedriges toxikologisches Profil auf.

Nun hat sich jedoch gezeigt, dass die verfügbaren strahlungshärtbaren Tinten zum Gestalten von Vinylfolie zur Herstellung von LVTs und Melamin-basierten Produkten wenig geeignet sind. Gründe hierfür liegen primär in der zu schwachen inneren Festigkeit der gehärteten Tintenschichten aber auch in deren zu geringen Schlagzähigkeit aber auch in der nicht gegebenen Kompatibilität mit der Trägerschicht und der zu laminierenden, transparenten Abriebsfolie. Ein weiteres Problem stellen die teilweise schlechten Haftungswerte insbesondere zur laminierten transparenten Abriebsfolie dar. Um das Problem einer mangelnden Zwischenschichthaftung zu vermeiden wird beispielsweise in der WO 2015/140682 A die Verwendung eines Klebesystems zur Fixierung der Abriebsfolie auf der Basisfolie beschrieben. Nachteilig an dem beschriebenen Prozess ist, dass der Einsatz und die Applikation eines Klebesystems einen zusätzlichen Prozessschritt darstellt, der mit einer Verteuerung des Prozesses einhergeht.

Die Verwendung von Lösungsmittel-basierten Systemen zur Dekoration von LVTs ist Stand der Technik. Mögliche Zusammensetzungen für Lösungsmittel-basierte Tinten werden beispielsweise in der US 2011/0064923 A1, der JP 2011026496 A und in der WO 2012/121700 A1 geoffenbart. Als nachteilig erweisen sich hierbei jedoch die durch den hohen Lösungsmittelanteil verursachten Emissionsmengen an VOC (volatile organic compounds), die einerseits umweltschädlich sind und unter hohen Kosten gefiltert und entsorgt werden müssen und andererseits den Einsatz von explosionsgeschützten Equipment erforderlich machen.

Wässrige Tinten werden ebenfalls für diesen Verwendungszweck eingesetzt, wobei jedoch ebenfalls gravierende Nachteile bestehen. Zusammensetzungen für wasser-basierte Tinten offenbart beispielsweise die WO 97/049774 A2. Die Formulierungen enthalten wasserlösliche organische Lösungsmittel wie polyhydrische Alkohole und stickstoffhaltige cyclische Stoffe, wie zum Beispiel 2-Pyrrolidinon, zur Verbesserung der Anti-Clogging Eigenschaften der Tinten. Den Einsatz von 2-Pyrrolidon und/oder dessen Derivaten und polyhydrischer Alkohole in festgelegten Konzentrationsbereichen in einer wässrigen Inkjet-Tinte offenbart beispielsweise die EP 1 277 810 B1. Die zu bedruckenden Vinylfolien sind sehr dünn und dadurch thermisch empfindlich, weswegen die enthaltenen Mengen an Wasser und Glykolen nur sehr langsam entfernt werden können, um eine thermische Schädigung der Folie zu vermeiden. Dies führt dann zu einer deutlich reduzierten Bildqualität, da die wässrigen Tintentropfen ineinander laufen und in weiterer Folge unscharf wirken. Eine Anwendung dieses Tintentyps auf Dekorpapier führt zu einer Quellung des Papiers, was sich auf die Bildschärfe und die Registrierung im Druckprozess negativ auswirkt.

Es besteht daher der Bedarf an UV-härtbaren Tinten für den Tintenstrahldruck für die Bedruckung und Laminierung zu LVTs und Melamin-basierten Produkten, welche die vorgenannten Mängel der bekannten UV-härtbaren, wässrigen und Lösungsmittel-basierten Tinten überwinden und zugleich bei der Laminierung mit einer weiteren Folie aus Vinyl oder Polyester bzw. einem Melamin-basierten Overlay als Haftungsbrücke wirken können und die strukturelle Integrität des Verbundes nicht schwächen.

Überraschenderweise wurde gefunden, dass laminierbare mehrstufig härtende Tinten, umfassend Verbindungen zur Bildung mindestens einer organischen Matrix, ausgewählt aus Acrylat- und/oder Methacrylat- und/oder Vinylacrylat-Monomeren bzw. Acrylat- und/oder Methacrylat- und/oder Vinylacrylat-Oligomeren, sowie Mischungen hievon, welche mindestens eine organische Matrix durch radikalische Polymerisation gehärtet wird und welche Härtung durch Strahlung initiiert werden kann, und Alkoxysilane in einer Menge von 10 bis 60 Gew.-%, mehr bevorzugt 20 bis 50 Gew.-%, bezogen auf die Gesamtformulierung zur Bildung mindestens einer anorganischen Matrix, welche durch nicht-radikalische Polymerisation gehärtet wird und welche Härtung thermisch initiiert werden kann, für den Tintenstrahldruck das Laminieren der Druckbilder zwischen zwei Vinyl- oder Polyesterfolien bzw. die Verpressung mit einem Melamin-basierten Overlay zulassen, wenn die Tinte neben einer Dispergierhilfe weiters ein strukturverstärkendes Polymer ausgewählt aus Polyester, Polyurethane und Polyamide mit einer zahlenmittleren Molmasse (Mn) von größer 3000 g/mol, bevorzugt größer 10.000 g/mol und besonders bevorzugt größer 30.000 g/mol enthält und die Viskosität der Tinte bei 50 °C im Bereich von 6 bis 15 mPa·s, besonders bevorzugt im Bereich von 9 bis 11 mPa·s liegt, gemessen mit einem Brookfield Rheometer unter Verwendung eines UL-Adapters mit einer Rotationsgeschwindigkeit von 50 Umdrehungen pro Minute. Solche Tinten wirken als Haftungsbrücke zwischen den Folien und verbessern deren Zusammenhalt. Es wird vermutet, dass die durch die erste, durch Strahlung initiierte Härtung noch nicht ausgehärtete anorganische Matrix an die und ggf. in die Folien wandert und dann durch die nachfolgende zweite, thermisch initiierte Härtung zu einer verstärkten Bindung zwischen den Folien führt. Unter der nichtradikalischen Polymerisation der anorganischen Matrix wird gemäß vorliegender Erfindung auch eine Polykondensation oder andere dem Fachmann bekannte Mechanismen zur Kettenbildung aus Monomeren, Oligomeren und Polymeren verstanden. Bei den erfindungsgemäßen Tinten sind die Verbindungen zur Bildung der mindestens einen anorganischen Matrix Alkoxysilane und unterliegen während der Laminierung einer thermisch induzierten Hydrolyse und Kondensation, wodurch es neben dem bereits durch die strahlungsinduzierte Härtung gebildeten organischen Polymernetzwerk zur Ausbildung eines zweiten, anorganischen, auf Si-O-Si-Bindungen basierenden Netzwerk kommt. Dieses zweite Netzwerk verstärkt die vorhandene Struktur und sorgt für eine chemische Verbindung der beiden Folien in der Laminierungsphase.

Vorzugsweise ist das erfindungsgemäß zum Einsatz kommende strukturverstärkende Polymer in der Tinte löslich und/oder reagiert bei der Matrixbildung nicht mit den in der Tinte enthaltenen Matrixbildnern. Auf diese Weise ist das strukturverstärkende Polymer nicht mit dem durch die radikalische Polymerisation entstandenen Netzwerk kovalent verbunden, wodurch die Eigenschaften des Polymers erhalten bleiben. Als mögliche Polymere zur Verwendung als Strukturverstärker in der erfindungsgemäßen Tinte kommen wie erwähnt Polyester, Polyurethane und Polyamide in Frage.

Gemäß einer weiteren bevorzugten Ausführungsform der vorliegenden Erfindung enthält die Tinte weniger als 2 Gew.-% Wasser, bevorzugt weniger als 1,0 Gew.-% Wasser und besonders bevorzugt weniger als 0,1 Gew.-% Wasser, jeweils bezogen auf die Gesamtformulierung.

Günstig ist auch, wenn das strukturverstärkende Polymer der Tinte ein Polyester ist. Ein solcher erfindungsgemäß zum Einsatz kommender strukturverstärkender Polyester weist bevorzugt einen Glasübergangsbereich von -10 °C bis 20 °C auf, wobei es sich sowohl um amorphe als auch um semi-kristalline Polyester handeln kann. Weiters liegt die Zugfestigkeit der verwendeten Polyester vorzugsweise bei zumindest 30 psi, bevorzugter bei größer 500 psi, und noch bevorzugter bei mehr als 1000 psi. Der Schmelzflussindex der entsprechenden Polyester liegt bevorzugt zwischen 90 °C und 130 °C und soll 150 °C nicht überschreiten.

Wie oben dargelegt sind in der erfindungsgemäßen Tinte die Verbindungen zur Bildung der mindestens einen organischen Matrix ausgewählt aus Acrylat- und/oder Methacrylat- und/oder Vinylacrylat-Monomere bzw. Acrylat- und/oder Methacrylat- und/oder Vinylacrylat-Oligomeren, sowie Mischungen hievon. Gegebenenfalls können auch Farbstoffe und Photoinitiatoren, wobei letztere nur im Falle UV-härtbarer Tinten zwingend sind, vorhanden sein. Optional können die Tinten weitere Additive wie Pigmentstabilisatoren, HALS-Verbindungen und UV-Stabilisatoren enthalten.

Gemäß einer weiteren bevorzugten Ausführungsform sind in der erfindungsgemäßen Tinte weiters einfach- oder mehrfach-funktionelle, vinyl-basierte Komponenten enthalten, vorzugsweise in einem Konzentrationsbereich von 3 bis 60 Gew.-%, besonders bevorzugt von 7 bis 40 Gew.-%. Derartige Komponenten verleihen auf Grund der chemischen Ähnlichkeit zum Folienmaterial der LVTs und Melamin-basierten Produkten der erfindungsgemäßen Tinte gute Haftungseigenschaften an den Folien. Im Rahmen der Erfindung sind aber auch andere geeignete Komponenten wie zum Beispiel Melamingruppen enthaltende Verbindungen möglich.

Weiters wird bevorzugt, wenn bei den erfindungsgemäßen Tinten die Verbindungen zur Bildung der mindestens einen organischen Matrix ausgewählt sind aus Acrylat- und/oder Methacrylat- und/oder Vinylacrylat-Monomere bzw. Acrylat- und/oder Methacrylat- und/oder Vinylacrylat-Oligomere, sowie Mischungen hievon. Alkoxysilane bilden das zweite, anorganische, auf Si-O-Si-Bindungen basierende Netzwerk, welches die vorhandene Struktur verstärkt und für eine chemische Verbindung der beiden Folien in der Laminierungsphase sorgt. Dieser zweite Härtungsmechanismus, welcher vorzugsweise bei einer Temperatur zwischen 110 °C und 190 °C, bevorzugt zwischen 130 °C und 170 °C stattfindet, führt zu einer signifikanten Erhöhung der Glasübergangstemperatur der Tinte nach Härtung der organischen Matrix/Matrices auf zwischen -20 °C und 0 °C, bzw. nach Härtung der organischen und anorganischen Matrices auf zwischen 0 °C und 30 °C. Diese Erhöhung der Glasübergangstemperatur führt auch zu einer Erhöhung der Scherfestigkeit von unter Verwendung der erfindungsgemäßen Tinte hergestellten LVTs und Melamin-basierten Produkten. Bevorzugt wird dieser zweite Härtungsschritt bei einer Temperatur durchgeführt, welche unterhalb des Siedepunkts der eingesetzten Silane liegt.

Durch die Kombination der beschriebenen Komponenten in einer mehrstufig härtenden Tinte, welche während der Härtung zumindest eine organische Matrix und zumindest eine anorganische Matrix ausbildet, konnten die zuvor dargelegten Nachteile des heute vorhandenen Standes der Technik beseitigt werden.

Die erfindungsgemäßen Tinten enthalten dabei das strukturverstärkende Polymer bzw. vorzugsweise den strukturverstärkenden Polyester, vorzugsweise in einem Umfang von 2 bis 20 Gew.-%, bevorzugt in einer Menge von 4 bis 10 Gew.-%. Es wurde gefunden, dass bei Einhaltung der oben genannten Mengen die LVTs und Melamin-basierten Produkte, hergestellt unter Verwendung der erfindungsgemäßen Tinte, beste Scherfestigkeitswerte aufwiesen.

Gemäß einer weiteren bevorzugten Ausführungsform der vorliegenden Erfindung enthält die erfindungsgemäße Tinte neben Acrylaten zur Bildung der mindestens einen organischen Matrix weiters
a. 10 bis 40 Gew.-% eines Alkoxysilans zur Bildung der mindestens einen anorganischen Matrix,
b. 4 bis 30 Gew.-% eines strukturverstärkenden Polymers, welches nicht in die Matrices eingebaut wird, und
c. 5 bis 20 Gew.-% Vinylverbindungen zum Einbau in die organische Matrix.

Auch hier zeigte sich, dass durch die Kombination der angegebenen Komponenten in Einhaltung der genannten Mengen die LVTs und Melamin-basierten Produkte, hergestellt unter Verwendung der erfindungsgemäßen Tinte, ausgezeichnete Scherfestigkeitswerte aufwiesen. Verwendbare Acrylate für Tintenstrahldrucker zur Bildung der mindestens einen organischen Matrix werden in beispielhafter Weise weiter unten angegeben

Zusätzlich können in den erfindungsgemäßen Tinten geblockte Isocyanat-Härter enthalten sein, die in strukturverstärkenden Polymeren bzw. Polyestern enthaltene Hydroxyl-Gruppen vernetzten können. Bei den in den erfindungsgemäßen Formulierungen in optionaler Weise zu verwendenden reversibel geblockten Isocyanathärtern handelt es sich in bevorzugter Weise um aliphatische Isocyanate. Besonders bevorzugt sind Härter, welche bei Raumtemperatur flüssig sind. Beispiele für geeignete Härter sind Desmodur® BL 3175, Desmodur® BL 3370 MPA oder Desmodur® BL 3475 BA/SN (alle BAYER) oder Vestanat® B 1358 A oder Vestanat® B 1370 (EVONIK).

Bei dem erfindungsgemäß zu verwendenden strukturverstärkenden Polyester kann es sich beispielsweise um Vittel V3200B, V3300B, V3350B, V3550B, KP7915, KP7962 der Firma Bostik handeln.

Bei der Auswahl des strukturverstärkenden Polymers bzw. Polyesters und dessen Anteil in der Formulierung ist auf die Viskosität der resultierenden Tinte Bedacht zu nehmen. Die Viskosität der erfindungsgemäßen Tinten liegt wie bereits erwähnt bei Verarbeitungstemperatur - hier 50 °C, üblicherweise liegen diese Temperaturen von ca. 45 °C bis 60°C - im Bereich von 6 bis 15 mPa·s, besonders bevorzugt im Bereich von 9 bis 11 mPa·s. Es gilt, dass Komponenten mit niedriger Funktionalität tendenziell niedrigere, Komponenten mit hoher Funktionalität tendenziell höhere Viskosität der Tinte zur Folge haben. Gemessen wurde die Viskosität der erfindungsgemäßen Tinte mittels eines Rheometers des Herstellers Brookfield unter Verwendung eines UL-Adapters mit einer Rotationsgeschwindigkeit von 50 Umdrehungen pro Minute, jeweils bei Verarbeitungstemperatur (d.h. Drucktemperatur, hier 50 °C).

Bei den erfindungsgemäß zum Einsatz kommenden, Vinyl-basierten Monomeren können beispielsweise die folgenden Verbindungen eingesetzt werden: N-Vinyl-pyrrolidon, N-Vinylcaprolactam, N-Vinyl-imidazole, N-Vinyl-N-Methylacetamid, Ethylvinylether, n-Butylvinylether, iso-Butylvinylether, tert.-Butylvinylether, Cyclohexylvinylether, 2-Ethylhexylvinylether, Dodecylvinylether, Octadecylvinylether, 1,4-Butandioldivinylether, Diethylenglycoldivinylether, Triethylenglycoldivinylether, 1,4-Cyclohexandimethanoldivinylether, Hydroxybutylvinylether, 1,4-Cyclohexandimethanolmonovinylether, 1,2,4-Trivinylcyclohexan, Vinylphosphonsäure und Vinylphosphonsäuredimethylester, Vinylethoxyethylacrylat usw..

Bei den erfindungsgemäßen zu verwendenden Alkoxysilanen können beispielsweise die folgenden Verbindungen eingesetzt werden: N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3 -(2-Aminomethylamino)-propyltriethoxysilan, N-(2-Aminoethyl)-3-aminopropylmethyldimethoxysilan, 3 -Aminopropyltrimethoxysilan, 3 -Ureidopropyltrimethoxysilan, N-Methyl[3-(Trimethoxysilyl)-propyl]carbamate, N-Trimethoxysilylmethyl-O-methylcarbamat, N-Dimethoxy(methyl)silylmethyl-O-methylcarbamat, Tris-[3-(trimethoxysilyl)-propyl] -isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl) -methyldimethoxysilan, Dicyclopentyldimethoxysilan, Phenyltriethoxysilan, Triacetoxyethylsilan, 1,2-Bis(triethoxysilyl)ethan usw.. Bevorzugt werden Silane eingesetzt, welche einen Siedepunkt oberhalb der Laminierungstemperatur haben, sofern eine solche Laminierung durchgeführt wird.

Bei den Acrylat- und Methacrylatmonomeren sind im Rahmen der Erfindung mono- bis oligofunktionelle Verbindungen verwendbar. Die Vielfalt an verfügbaren Stoffen ist sehr groß, die nachsehende Auflistung stellt nur einen Ausschnitt daraus dar.

Beispiele für monofunktionelle (Meth-)Acrylsäureester sind: Laurylacrylat, Isodecylacrylat, Tridecylacrylat, Tetrahydrofurfurylacrylat (THFA), 2-(2-Ethoxyethoxy)ethylacrylat (EOEOEA), Cyclisches Trimethylolpropanformalacrylat (CTFA), Isobornylacrylat (IBOA), C₁₂-C₁₄ Alkylmethacrylat, Tetrahydrofurfurylmethacrylat (THFMA), Polypropylenglykolmonomethacrylat und Isobornylmethacrylat. Bei den zu verwendenden difunktionellen (Meth)-Acrylsäureestern handelt es sich beispielsweise um ethoxyliertes Bisphenol-A-diacrylat, 1,6-Hexandioldiacrylat (HDDA), Polyethylenglykol-200-diacrylat (PEG200DA), Tetraethylenglykoldiacrylat (TTEGDA), Triethylenglykoldiacrylat (TEGDA), propoxyliertes Neopentylglykoldiacrylat, Esterdioldiacrylat, Tripropylenglykoldiacrylat (TPGDA, ethoxyliertes Bisphenol-A-diacrylat, Dipropylenglykoldiacrylat (DPGDA), alkoxyliertes 1,6-Hexandioldiacrylat, ethoxyliertes Bisphenol-A-diacrylat, Triethylenglykoldimethacrylat (TIEGDMA), Ethylenglykoldimethacrylat (EGDMA), Tetraethylenglykoldimethacrylat (TTEGDMA), 1,4-Butandioldimethacrylat (BDDMA), Diethylenglykoldimethacrylat (DEGDMA), 1,6-Hexandioldimethacrylat (HDDMA), 1,3-Butylenglykoldimethacrylat (BGDMA), Ethoxyliertes Bisphenol-A-dimethacrylat und Tricyclodecandimethanoldimethacrylat. Verwendbare (Meth)-Acrylsäureester der Funktionalität 3 oder höher sind beispielsweise ethoxyliertes Trimethylolpropantriacrylat, Pentaerythritoltetraacrylat (PETTA), Trimethylolpropantriacrylat (TMPTA), Ditrimethylolpropantetraacrylat (DiTMPTTA), Tris(2-Hydroxyethyl)isocyanurattriacrylat, Dipentaerythritolpentaacrylat (DiPEPA), Dipentaerythritolhexaacrylat (DiPEHA), ethoxyliertes Trimethylolpropantriacrylat, Pentaerythritoltriacrylat, ethoxyliertes Trimethylolpropantriacrylat, propoxyliertes Trimethylolpropantriacrylat, ethoxyliertes Pentaerythritoltetraacrylat (PPTTA), ethoxyliertes Trimethylolpropantriacrylat und Trimethylolpropantrimethacrylat (TMPTMA).
Neben den hier aufgelisteten Monomeren gibt es noch zahlreiche weitere Acrylate mit ähnlichem Aufbau. Sie finden sich in den Produktübersichten zahlreicher Hersteller wie Sartomer/Arkema, BASF oder Rahn, welche dem Fachmann geläufig sind.

Daneben können auch polymerisationsfähige Oligomere mitverwendet werden. Diese umfassen Epoxyacrylate, aliphatische sowie aromatische Urethanacrylate, Polyesteracrylate sowie unverzweigte Acrylatoligomere.

Im Rahmen der Erfindung geeignete Pigmente können organischer wie anorganischer Natur sein. Geeignete anorganische Pigmente umfassen zum Beispiel Titandioxid, verschiedene Spinelle und Metalloxide, und Ruß, während geeignete organische Pigmente beispielsweise die Klassen der Phthalocyanine, Anthrachinone, Perylene, Carbazole, Monoazo- und Bisazobenzimidazolone, Isoindolinone, Monoazonaphthole, Chinacridone, Diazopyranthrone, Pyrazolone und Pyranthrone umfassen.

Beispiele kommerziell verfügbarer organischer bzw. anorganischer Pigmente sind im Colour Index, Bände 1 bis 8, der Society of Dyers and Colourists, Yorkshire, England, aufgelistet, wie etwa Pigment Blau 1, Pigment Blau 15, Pigment Blau 15:1, Pigment Blau 15:2, Pigment Blau 15:3, Pigment Blau 15:4, Pigment Blau 15:6, Pigment Blau 16, Pigment Blau 24, Pigment Blau 60, Pigment Braun 5, Pigment Braun 23, Pigment Braun 25, Pigment Gelb 3, Pigment Gelb 14, Pigment Gelb 16, Pigment Gelb 17, Pigment Gelb 24, Pigment Gelb 65, Pigment Gelb 73, Pigment Gelb 74, Pigment Gelb 83, Pigment Gelb 95, Pigment Gelb 97, Pigment Gelb 108, Pigment Gelb 109, Pigment Gelb 110, Pigment Gelb 113, Pigment Gelb 128, Pigment Gelb 129, Pigment Gelb 138, Pigment Gelb 139, Pigment Gelb 150, Pigment Gelb 154, Pigment Gelb 156, Pigment Gelb 175, Pigment Grün 1, Pigment Grün 7, Pigment Grün 10, Pigment Grün 36, Pigment Orange 5, Pigment Orange 15, Pigment Orange 16, Pigment Orange 31, Pigment Orange 34, Pigment Orange 36, Pigment Orange 43, Pigment Orange 48, Pigment Orange 51, Pigment Orange 60, Pigment Orange 61, Pigment Rot 4, Pigment Rot 5, Pigment Rot 7, Pigment Rot 9, Pigment Rot 22, Pigment Rot 23, Pigment Rot 48, Pigment Rot 48:2, Pigment Rot 49, Pigment Rot 112, Pigment Rot 122, Pigment Rot 123, Pigment Rot 149, Pigment Rot 166, Pigment Rot 168, Pigment Rot 170, Pigment Rot 177, Pigment Rot 179, Pigment Rot 190, Pigment Rot 202, Pigment Rot 206, Pigment Rot 207, Pigment Rot 224, Pigment Violett 19, Pigment Violett 23, Pigment Violett 32, Pigment Violett 37, Pigment Violett 42, Pigment Schwarz 6 und Pigment Schwarz 7.

Neben Pigmenten können auch Farbstoffe in den Tinten als farbgebende Komponente zum Einsatz kommen. In weiterer Folge werden Farbstoffe angeführt, die in den erfindungsgemäßen Formulierungen eingesetzt werden können, wobei neben den hier aufgelisteten Typen noch zahlreiche weitere mit ähnlichem Aufbau kommerziell verfügbar sind. Sie finden sich in den Produktübersichten zahlreicher Hersteller wie BASF, Clariant oder Keystone, welche dem Fachmann geläufig sind. Beispielsweise werden die folgenden Typen angeführt: Orasol® Black X45, Orasol® Black X51, Orasol® Black X55, Orasol® Blue 825, Orasol® Blue 855, Orasol® Brown 324, Orasol® Brown 326, Orasol® Orange 245, Orasol® Orange 247, Orasol® Orange 251, Orasol® Orange 272, Orasol® Pink 478, Orasol® Red 330, Orasol® Red 335, Orasol® Red 355, Orasol® Red 363, Orasol® Red 365, Orasol® Red 385, Orasol® Red 395, Orasol® Red 471, Orasol® Yellow 081, Orasol® Yellow 141, Orasol® Yellow 152, Orasol® Yellow 157, Orasol® Yellow 190, Savinyl ® Yellow 2GLS, Savinyl Black RLSN, Savinyl Blue GLS, Savinyl Feuerrot GLS, Savinyl Fire Red 3GLS.

Während die Farbstoffe in der Tintenbasis zumindest teilweise gelöst werden können, werden die Pigmente üblicherweise über Vermahlen in ausgewählten reaktiven Monomeren und/oder Oligomeren in die Formulierungen eingebracht. Ein Zusatz von Dispergier- und Benetzungshilfen vermag oft die Vermahlleistung zu steigern und die durch den Mahlprozess deagglomerierten Pigmente zu stabilisieren. Geeignete derartige Additive sind beispielsweise unter den Handelsbezeichnungen SOLSPERSE® (The Lubrizol Corporation), EFKA® (Ciba Specialty Chemicals) und BYK (Byk Chemie) erhältlich. Die Menge an zugesetzter Dispergierhilfe richtet sich nach der Art und Menge des verwendeten Pigmentes und beträgt bei organischen Pigmenten ca. 20 bis 100%, bei anorganischen Pigmenten ca. 5 bis 80%, jeweils bezogen auf die Menge des Pigmentes.

Sollen die organischen Verbindungen der erfindungsgemäßen Tinten zur Bildung einer organischen Matrix mittels UV-Strahlung gehärtet werden, sollten den Tinten bevorzugt auch Photoinitiatoren zugegeben werden. Besonders bevorzugte Photoinitiatoren sind unter anderen jene aus den Klassen der Acylphosphinoxide und Acylphosphonate, gut geeignete Vertreter sind beispielsweise Bis(2,4,6-trimethylbenzoyl)-phenylphosphinoxid, Bis(2,6-dimethoxybenzoyl)-2,4,4-trimethyl-pentylphosphinoxid, daneben weiters 1-Hydroxy-cyclohexylphenylketon, 2-Methyl-1 -[4-(methylthio)phenyl] -2-morpholinopropen-1 -on und 2-Hydroxy-2-methyl-1 - phenylpropan-1-on. Diese Verbindungen sind beispielsweise unter den Handelsbezeichnungen Irgacure® (BASF) oder Speedcure® (Lambson) erhältlich. Weiters können unterschiedliche Modifikationen von Alpha-Hydroxy-Ketonen, Benzophenylen und Alpha-Amino-Ketonen eingesetzt werden.

Co-Initiatoren und Amin-Synergisten können verwendet werden, um die Härtungsrate zu verbessern, Beispiele hierfür sind Isopropylthioxanthon, Ethyl-4-(dimethylamino)benzoat und Dimethylaminoethylmethacrylat.

Besonders bevorzugt werden polymere Versionen der oben genannten Class 1 & 2 Photoinitiatoren und Synergisten eingesetzt. Diese werden beispielsweise von den Firmen Rahn, Lambson und BASF angeboten.

Die bevorzugten Zugabemengen liegen im Bereich von 1 bis 12, besonders bevorzugt im Bereich von 2 bis 8 Gew.-%, bezogen auf das Gesamtgewicht der Formulierung. Auch die Wahl des Photoinitiators hängt stark von Art und Menge des verwendeten Pigmentes ab; es ist vorteilhaft, wenn Pigment(e) und Photoinitiator(en) nicht bei denselben Wellenlängen absorbieren. Neben molekular vorliegenden Photoinitiatoren können auch polymere Photoinitiatoren, beispielsweise von der Firma Lambson unter der Bezeichnung SPEEDCURE® eingesetzt werden. Außerdem können von der Firma Allnex vertriebene, selbst-inizierende Acrylate der Produktlinie LEO® verwendet werden.

Als Additive können weiters thermische Stabilisatoren Anwendung finden. Diese verhindern die Autopolymerisation der polymerisierbaren Inkjet-Tinten durch Abfangen der durch thermisch initiierten Zerfall der Photoinitiatoren entstehenden Radikale und erhöhen so die Lagerstabilität. Diese Produkte werden unter verschiedenen Handelsnamen wie Irgafos®, Irganox®, Irgastab®, Irganox®, Irgastab®, Chimassorb®, Tinuvin®, Uvinul®, Hycite® von unterschiedlichen kommerziellen Anbietern vertrieben. Die bevorzugte Zugabemenge dieser Verbindungen liegt in Bereichen unter 1 Gew.-%, bevorzugt unter 0,5 Gew.-%.

Als weitere Klasse von Additiven können Stoffe mit UV-absorbierender Wirkung eingesetzt werden. Neben Stoffen, die nicht in die Polymermatrix eingebaut werden, wie zum Beispiel verschiedene TINUVIN® Typen der Firma BASF können auch UV-Absorber mit einer polymerisierbaren Gruppe eingesetzt werden, die durch den Einbau ins Polymer-Netzwerk nicht migrieren können. Solcherart Produkte werden beispielsweise von der Firma Otsuka unter dem Namen RUVA 93 vermarktet. Weiters können sogenannte HALS Additive eingesetzt werden, die beispielsweise ebenfalls unter dem Namen TINUVIN® von der Firma BASF vertrieben werden.

Die erfindungsgemäßen Formulierungen werden durch Zusammenbringen der betreffenden Komponenten hergestellt, durch Mischen, Rühren, Vermahlen und sonstige Methoden, die geeignet sind, homogene Zusammensetzungen hervorzubringen.

Die fertigen Formulierungen können anschließend über Tintenstrahldrucker nicht nur im multipass-, sondern insbesondere auch im single-pass-Verfahren appliziert und anschließend durch UV- oder Elektronenstrahlung vernetzt werden.

Die Erfindung wird anhand der nachfolgenden Beispiele näher erläutert, ohne sie auf den Umfang der Beispiele zu reduzieren. Dem Fachmann ist es ein Leichtes, die Beispiele im Rahmen der Erfindung abzuwandeln und spezifischen Erfordernissen anzupassen.

Die verwendete Mahlpaste setzte sich aus folgenden Bestandteilen zusammen: 25 % Pigment (beispielsweise Pigment Blue 15:3), 3% Tegodisperse 72% CTFA. Die Vermahlung der Paste erfolgte auf einer Kugelmühle, bis der gewünschte Partikeldurchmesser erreicht wurde.

In den nachstehenden Tabellen 1 und 2 sind die Tintenbestandteile jeweils links von oben nach unten und die einzelnen Versuchschargen in der Kopfzeile angeführt. Die Mengenangaben sind in Gew.-% bezogen auf die Gesamtformulierung.

**Tabelle 1: Übersicht der geprüften Formulierungen:**

| | V1 | V2 | V3 | V4 | IJ1 | IJ2 | IJ3 | IJ4 | IJ5 | IJ6 | IJ7 | IJ8 | IJ9 |
|---|---|---|---|---|---|---|---|---|---|---|---|---|---|
| Speedcure 84 | 1,0 | 1,0 | 1,0 | 1,0 | 2 | 3 | 2 | 2 | 3 | 2 | 2 | 1,5 | |
| Speedcure TPO | 3,5 | 3,5 | 3,5 | 3,5 | | | | | | | | | |
| Omnirad 380 | 6,5 | 6,5 | 6,5 | 6,5 | 2 | 4 | 2 | 2 | 4 | 2 | 2 | 1,5 | |
| Sartomer SR531 | 52 | 52 | 52 | 52 | | | | 14 | | | | | 41 |
| Sartomer 420 | | | | | | | | | | | | 41 | |
| Sartomer SR339C | | 4 | | | 13 | 10 | 8 | | 34 | 40 | 40 | | |
| N-Vinylacaprolactam | 19 | 19 | 14 | 14 | | | | | | | | 10 | 10 |
| Sartomer SR399LV | 6,5 | | | | | | | | | | | | |
| Sartomer SR351 | 1,5 | | | | | | | | | | | | |
| Vitel 3550B | | 4 | | 3 | 25 | | 20 | | | | | | |
| Vitel 2700B.F | | | 3 | | | 6 | | 9 | 5 | 5 | 5 | | |
| Butandioldivinylether | | | | 10 | 30 | 47 | 20 | 30 | 10 | 10 | 10 | | |
| VEEA | | | | | | 9 | 5 | | 6 | 6 | 6 | 5 | 5 |
| K-PURE CXC-1614 | | | | | | | | | | | | | 1 |
| Peroxan HX | | | | | | | | | | | | 1 | |
| Sartomer CN704 | | | | | | | | | | | | 10 | 10 |
| Sartomer SR506D | | | | | | | | | | | | 7 | 7 |
| Sartomer SR508 | | | | | | | | 10 | | | | | |
| Dynasylan GLYMO | | | 10 | | 25 | 11 | 40 | 30 | 28 | 32 | 30 | 15 | 15 |
| RUVA 93 | | | | | | | | | | | 2 | | |
| Mahlpaste blau | 10 | 10 | 10 | 10 | | 10 | | | 10 | | | 8 | 8 |
| Orasol Schwarz CN | | | | | 3 | | 3 | 3 | | 3 | 3 | | |
| SUMME | 100 | 100 | 100 | 100 | 100 | 100 | 100 | 100 | 100 | 100 | 100 | 100 | 100 |

Die in Tabelle 1 aufgelisteten Rohstoffe wurden vermischt; Zahlenangaben bedeuten Gewichtsteile.

**Tabelle 2: Erläuterung zu den eingesetzten Rohstoffen**

| | Lieferant | CAS Nummer (falls vorhanden) | Chem. Beschreibung |
|---|---|---|---|
| Speedcure 84 | Lambson | 947-19-3 | Type 1 Photoinitiator |
| Speedcure TPO | Lambson | 84434-11-7 | Type 1 Photoinitiator |
| Omnirad 380 | IGM | 162881-26-7 | Type 1 Photoinitiator |
| SR531 | Sartomer/Arkema | 66492-51-1 | Acrylat-Monomer |
| SR339C | Sartomer/Arkema | 48145-04-6 | Acrylat-Monomer |
| SR420 | Sartomer/Arkema | 87954-40-3 | Acrylat-Monomer |
| CN704 | Sartomer/Arkema | - | Struktur verstärkendes Polymer |
| SR506D | Sartomer/Arkema | 5888-33-5 | Acrylat-Monomer |
| K-PURE CXC-1614 | KING Industries | - | Super Säure Generator |
| Peroxan HX | Pergan | 78-63-7 | Peroxid |
| N-Vinylacaprolactam | BASF | 2235-00-9 | Vinyl-Monomer |
| SR399LV | Sartomer/Arkema | 60506-81-2 | Acrylat-Monomer |
| SR351 | Sartomer/Arkema | 15625-89-5 | Acrylat-Monomer |
| Vitel 3550B | Bostik/Arkema | - | Strukturverstärkendes Polymer |
| Vitel 2700B.F | Bostik/Arkema | - | Strukturverstärkendes Polymer |
| Butandioldivinylether | BASF | 3891-33-6 | Vinyl- Monomer |
| VEEA | Nippon Shukobai | 86273-46-3 | Acrylat/Vinyl-Monomer |
| SR508 | Sartomer/Arkema | 57472-68-1 | Acrylat-Monomer |
| GLYMO | Evonik | 2530-83-8 | Alkoxy-Silan |
| RUVA 93 | Otsuka | 96478-09-0 | Reaktiver UV-Absorber |
| Mahlpaste blau | TIGER | - | |
| Orasol Schwarz CN | BASF | - | Farbstoff |

Die Tinten wurden im Anschluss mittels Multipass Inkjet-Druck der Firma DYSS auf eine weiße LVT-Basisfolie appliziert, die organische Matrix mittels UV-Strahlung gehärtet und im Anschluss bei 130 °C, 5 bar für 30 Sekunden mit einer transparenten PVC-basierten Abriebsfolie laminiert, wobei die anorganische Matrix gehärtet wurde. In der folgenden Tabelle sind die Ergebnisse der durchgeführten Schältests der maximal beaufschlagbaren Kraft in N/cm angeführt.

**Tabelle 3: Ergebnisse der durchgeführten Prüfungen:**

| Versuchsnummer | Schältests LVT-Muster Max. Kraft [N/cm] | Gitterschnitt nach Verpressung mit Melaminoverlay auf Kurztaktpresse | Gitterschnitt nach Verpressung mit Melaminoverlay auf Doppelbandpresse | Gitterschnitt nach Verpressung mit Melaminoverlay auf Etagenpresse |
|---|---|---|---|---|
| V1 | 1 | Gt5 | Gt5 | Gt5 |
| V2 | 3 | Gt5 | Gt5 | Gt5 |
| V3 | 5 | Gt5 | Gt5 | Gt5 |
| V4 | 5 | Gt5 | Gt5 | Gt5 |
| IJ1 | 25 | Gt0 | Gt0 | Gt0 |
| IJ2 | 18 | Gt0 | Gt0 | Gt0 |
| IJ3 | 20 | Gt0 | Gt0 | Gt0 |
| IJ4 | 19 | Gt0 | Gt0 | Gt0 |
| IJ5 | 15 | Gt0 | Gt0 | Gt0 |
| IJ6 | 25 | Gt0 | Gt0 | Gt0 |
| IJ7 | 24 | Gt0 | Gt0 | Gt0 |
| IJ8 | 30 | Gt0 | Gt0 | Gt0 |
| IJ9 | 30 | Gt0 | Gt0 | Gt0 |

Die Tintenformulierungen V1-V4 der Vergleichsmuster zeigen allesamt zu geringe Verbundfestigkeiten bei den durchgeführten Tests. Nur durch Kombination der erfindungsgemäßen Bestandteile lassen sich bei unter Verwendung der erfindungsgemäßen Tinte hergestellten LVTs und Melamin-basierten Produkten Verbundfestigkeiten größer den geforderten 10 N/cm bzw. bei Melaminverpressung Gt0 erzielen.

Zusätzlich können zu den erfindungsgemäßen Tintenformulierungen auch noch Super-Säure Generatoren oder Peroxide zugegeben werden. Diese beschleunigen die Reaktion der AlkoxyGruppen während der thermischen Laminierung der Folien. Diese Stoffe werden beispielsweise von den Firmen KING Industries und Pergan angeboten.

## Patentansprüche

1. Laminierbare, mehrstufig härtende Tinte, umfassend Verbindungen zur Bildung mindestens einer organischen Matrix, ausgewählt aus Acrylat- und/oder Methacrylat- und/oder Vinylacrylat-Monomeren bzw. Acrylat- und/oder Methacrylat- und/oder Vinylacrylat-Oligomeren, sowie Mischungen hievon, welche mindestens eine organische Matrix durch radikalische Polymerisation gehärtet wird und welche Härtung durch Strahlung initiiert werden kann, und Alkoxysilane in einer Menge von 10 bis 60 Gew.-%, mehr bevorzugt 20 bis 50 Gew.-%, bezogen auf die Gesamtformulierung zur Bildung mindestens einer anorganischen Matrix, welche durch nicht-radikalische Polymerisation gehärtet wird und welche Härtung thermisch initiiert werden kann, **dadurch gekennzeichnet, dass** die Tinte neben einer Dispergierhilfe weiters ein strukturverstärkendes Polymer ausgewählt aus Polyester, Polyurethane und Polyamide mit einer zahlenmittleren Molmasse (Mn) von größer 3000 g/mol, bevorzugt größer 10.000 g/mol und besonders bevorzugt größer 30.000 g/mol, enthält und die Viskosität der Tinte bei 50 °C im Bereich von 6 bis 15 mPa·s, besonders bevorzugt im Bereich von 9 bis 11 mPa·s liegt, gemessen mit einem Brookfield Rheometer unter Verwendung eines UL-Adapters mit einer Rotationsgeschwindigkeit von 50 Umdrehungen pro Minute.

2. Tinte nach Anspruch 1, **dadurch gekennzeichnet, dass** das strukturverstärkende Polymer in der Tinte löslich ist und/oder bei Bildung der Matrix nicht mit den in der Tinte enthaltenen Matrixbildnern reagiert.

3. Tinte nach Anspruch 1 und 2, **dadurch gekennzeichnet, dass** die Tinte weniger als 2 Gew.-% Wasser, bevorzugt weniger als 1,0 Gew.-% Wasser und besonders bevorzugt weniger als 0,1 Gew.-% Wasser, jeweils bezogen auf die Gesamtformulierung, enthält.

4. Tinte nach einem der vorhergehenden Ansprüche, **dadurch gekennzeichnet, dass** die Bildung der mindestens einen anorganischen Matrix bei 110 °C bis 190 °C, vorzugsweise bei 130 °C bis 170 °C erfolgt.

5. Tinte nach Anspruch 4, **dadurch gekennzeichnet, dass** sie weiters einfach oder mehrfach-funktionelle, Vinyl-basierte Komponenten, vorzugsweise in einem Konzentrationsbereich von 3 bis 60 Gew.-%, besonders bevorzugt von 7 bis 40 Gew.-%, enthält.

6. Tinte nach Anspruch 3, **dadurch gekennzeichnet, dass** die Glasübergangstemperatur der Tinte nach Härtung der organischen Matrix/Matrices zwischen -20 °C und 0 °C, bzw. nach Härtung der organischen und anorganischen Matrices zwischen 0 °C und 30 °C beträgt.

7. Tinte nach einem der vorhergehenden Ansprüche, **dadurch gekennzeichnet, dass** das strukturverstärkende Polymer in einem Umfang von 2 bis 20 Gew.-%, bevorzugt in einer Menge von 4 bis 10 Gew.-%, enthalten ist.

8. Tinte nach einem der vorhergehenden Ansprüche, welche neben Acrylaten zur Bildung der mindestens einen organischen Matrix weiters
a. 10 bis 40 Gew.-% eines Alkoxysilans zur Bildung der mindestens einen anorganischen Matrix,
b. 4 bis 30 Gew.-% eines strukturverstärkenden Polymers, welches nicht in die Matrices eingebaut wird, und
c. 5 bis 20 Gew.-% Vinylverbindungen zum Einbau in die organische Matrix enthält.

9. Tinte nach einem der vorhergehenden Ansprüche, **dadurch gekennzeichnet, dass** sie weiters geblockte Isocyanat-Härter enthält.

## Claims

1. Laminatable, multi-stage curing ink, comprising compounds for forming at least one organic matrix, selected from acrylate monomers and/or methacrylate monomers and/or vinyl acrylate monomers, or acrylate oligomers and/or methacrylate oligomers and/or vinyl acrylate oligomers, and mixtures thereof, which at least one organic matrix is cured by radical polymerisation and which curing can be initiated by radiation, and comprising alkoxysilanes in an amount of 10 to 60 wt.%, more preferably 20 to 50 wt.%, based on the entire formulation, for forming at least one inorganic matrix which is cured by non-radical polymerisation and which curing can be initiated thermally, **characterised in that** the ink, in addition to a dispersing aid, also contains a structure-reinforcing polymer selected from polyester, polyurethane and polyamide having a number-average molar mass (Mn) of greater than 3,000 g/mol, preferably greater than 10,000 g/mol and particularly preferably greater than 30,000 g/mol, and the viscosity of the ink at 50°C is in the range of 6 to 15 mPa·s, particularly preferably in the range of 9 to 11 mPa·s, measured by means of a Brookfield rheometer using a UL adapter at a rotation speed of 50 revolutions per minute.

2. Ink according to claim 1, **characterised in that** the structure-reinforcing polymer is soluble in the ink and/or does not react with the matrix formers contained in the ink when the matrix is formed.

3. Ink according to either claim 1 or claim 2, **characterised in that** the ink contains less than 2 wt.% of water, preferably less than 1.0 wt.% of water and particularly preferably less than 0.1 wt.% of water, in each case based on the entire formulation.

4. Ink according to any of the preceding claims, **characterised in that** the at least one inorganic matrix is formed at 110°C to 190°C, preferably at 130°C to 170°C.

5. Ink according to claim 4, **characterised in that** it further contains single- or multifunctional, vinyl-based components, preferably in a concentration range of 3 to 60 wt.%, particularly preferably of 7 to 40 wt.%.

6. Ink according to claim 3, **characterised in that** the glass transition temperature of the ink is between -20°C and 0°C after the organic matrix/matrices have been cured, and between 0°C and 30°C after the organic and inorganic matrices have been cured.

7. Ink according to any of the preceding claims, **characterised in that** the structure-reinforcing polymer is contained in an amount of 2 to 20 wt.%, preferably in an amount of 4 to 10 wt.%.

8. Ink according to any of the preceding claims, which contains in addition to acrylates for forming the at least one organic matrix:
a. 10 to 40 wt.% of an alkoxysilane for forming the at least one inorganic matrix;
b. 4 to 30 wt.% of a structure-reinforcing polymer which is not incorporated into the matrices; and
c. 5 to 20 wt.% of vinyl compounds for incorporation into the organic matrix.

9. Ink according to any of the preceding claims, **characterised in that** it further contains blocked isocyanate curing agents.

## Revendications

1. Encre durcissant en plusieurs étapes, stratifiable, comprenant des composés pour former au moins une matrice organique, choisis parmi les monomères acrylate et/ou méthacrylate et/ou acrylate de vinyle ou les oligomères d'acrylate et/ou de méthacrylate et/ou d'acrylate de vinyle, et leurs mélanges, laquelle au moins une matrice organique est durcie par polymérisation radicalaire et lequel durcissement peut être initié par rayonnement, et des alcoxysilanes en une quantité de 10 à 60% en poids, de préférence encore de 20 à 50% en poids, par rapport à la formulation totale pour la formation d'au moins une matrice inorganique qui est durcie par polymérisation non radicalaire et lequel durcissement peut être initié thermiquement, **caractérisée en ce que** l'encre, en plus d'un auxiliaire de dispersion, contient en outre un polymère renforçant la structure choisi parmi les polyesters, les polyuréthanes et les polyamides avec une masse moléculaire moyenne en nombre (Mn) supérieure à 3000 g/mol, de préférence supérieure à 10 000 g/mol et de manière particulièrement préférée supérieure à 30 000 g/mol, et la viscosité de l'encre à 50°C est située dans la gamme de 6 à 15 mPa.s, de manière particulièrement préférée dans la gamme de 9 à 11 mPa.s, mesurée avec un rhéomètre Brookfield en utilisant un adaptateur UL avec une vitesse de rotation de 50 tours par minute.

2. Encre selon la revendication 1, **caractérisée en ce que** le polymère renforçant la structure est soluble dans l'encre et/ou ne réagit pas avec les formateurs de matrice contenus dans l'encre lors de la formation de la matrice.

3. Encre selon la revendication 1 et 2, **caractérisée en ce que** l'encre contient moins de 2% en poids d'eau, de préférence moins de 1,0% en poids d'eau et de manière particulièrement préférée moins de 0,1% en poids d'eau, à chaque fois sur la base de la formulation totale.

4. Encre selon l'une des revendications précédentes, **caractérisée en ce que** la formation de la au moins une matrice inorganique a lieu à 110°C à 190°C, de préférence à 130°C à 170°C.

5. Encre selon la revendication 4, **caractérisée en ce qu'**elle contient en outre des composants à base de vinyle monofonctionnels ou multifonctionnels, de préférence dans une gamme de concentration de 3 à 60% en poids, de manière particulièrement préférée de 7 à 40% en poids.

6. Encre selon la revendication 3, **caractérisée en ce que** la température de transition vitreuse de l'encre après durcissement de la/des matrices organiques est entre -20°C et 0°C, ou après durcissement des matrices organiques et inorganiques est entre 0°C et 30°C.

7. Encre selon l'une des revendications précédentes, **caractérisée en ce que** le polymère renforçant la structure est contenu à raison de 2 à 20% en poids, de préférence en une quantité de 4 à 10% en poids.

8. Encre selon l'une des revendications précédentes, qui en plus des acrylates pour former la au moins une matrice organique contient en outre
a. 10 à 40% en poids d'un alcoxysilane pour former la au moins une matrice inorganique,
b. 4 à 30% en poids d'un polymère renforçant la structure, qui n'est pas incorporé dans les matrices, et
c. 5 à 20% en poids de composés vinyliques à incorporer dans la matrice organique.

9. Encre selon l'une quelconque des revendications précédentes, **caractérisée en ce qu'**elle contient en outre des durcisseurs isocyanates bloqués.
